# EUROPÄISCHE PATENTSCHRIFT

(11) **EP 0 825 095 B1**
(45) Veröffentlichungstag und Bekanntmachung des Hinweises auf die Patenterteilung: **09.01.2002**
(21) Anmeldenummer: 97113639.5
(22) Anmeldetag: 07.08.1997
(51) Int. Cl.: B62D 25/16, B62D 25/18

(54) **Spritzwasserfänger für Fahrzeuge**
Mudguard flap for vehicles
Bavette de garde-boue pour véhicules

(30) Priorität: 23.08.1996 DE 19634103
(43) Veröffentlichungstag der Anmeldung: 25.02.1998
(73) Patentinhaber: DaimlerChrysler AG, 70567 Stuttgart (DE)
(72) Erfinder: Von Heese, Armin, 71034 Böblingen (DE); König, Gerd, 73734 Esslingen (DE); Nädele, Volker, 71032 Böblingen (DE)

(56) Entgegenhaltungen:
- DE-U- 9 011 176
- US-A- 3 922 003
- US-A- 4 205 861

## Beschreibung

Die Erfindung betrifft einen Spritzwasserfänger für Fahrzeuge der im Oberbegriff des Hauptanspruches angegebenen Art.

Ein derartiger Spritzwasserfänger nach dem Oberbegriff des Anspruchs 1 ist der DE 40 35 854 A1 bereits als bekannt zu entnehmen, wobei der Spritzwasserfänger mehrere Fangrinnen mit V-förmigem Querschnitt aufweist, die sich parallel zur Längsmittelebene des Fahrzeugs erstrecken. In diesen Fangrinnen, deren Rinnenöffnung dem Abrollumfang des Rades abgewandt ist, wird hineingeschleudertes bzw. hineingespültes Spritzwasser in den Wasserkasten des Spritzwasserfängers hinuntergeleitet, aus dem es seitlich neben der Fahrspur auf die Fahrbahn abfließen kann.

Der bekannte Spritzwasserfänger zeichnet sich durch einen guten Abscheidewirkungsgrad aus, ist jedoch im Hinblick auf Radläufe unterschiedlicher Abmessungen wenig anpassungsfähig.Auch kann durch die Anordnung des bekannten Spritzwasserfängers die Bodenfreiheit des Fahrzeugs erheblich beeinträchtigt sein, so daß sich der Spritzwasserfänger nicht problemlos bei Fahrzeugen einsetzen läßt, deren Bodenfreiheit sich in Abhängigkeit vom Beladungszustand stark verändert. Eine Anpassung der konstruktiven Bauhöhe an wechselnde Einsatzbedingungen ist ebenfalls nicht ohne weiteres möglich.

Aus DE 90 11 176 U ist ein weiteres Schmutzfänger bekannt.

Aus der DE 31 23 252 A1 ist ferner ein Schmutzfänger bekannt, der sich der Belastungssituation des zugehörigen Fahrzeugs und in seiner konstruktiven Bauhöhe an wechselnde Einsatzbedingungen anpassen läßt. Hierzu ist der bekannte Schmutzfänger in mehrere Höhenabschnitte aufgeteilt, die durch Druckknöpfe oder ähnliche Befestigungsmittel zu einem langen Schmutzfänger verbunden oder bei Bedarf durch Abnehmen eines oder zweier Abschnitte verkürzt werden können. Es handelt sich bei diesem bekannten Schmutzfänger jedoch um einen Spritzlappen üblicher gummielastischer Bauart, der durch Aufsetzen auf der Fahrbahn oder dgl. nicht beschädigt wird und nur eine geringe Dicke aufweist.

Der Erfindung liegt die Aufgabe zugrunde, einen Spritzwasserfänger der gattungsgemäßen Art dahingehend weiterzuentwickeln, daß die Anpassungsfähigkeit des Spritzwasserfängers an Radläufe unterschiedlicher Abmessungen deutlich verbessert werden kann.

Die erfindungsgemäße Lösung dieser Aufgabe ist Gegenstand der Merkmale des Hauptanspruchs.

Aus den übrigen Ansprüchen sind vorteilhafte Ausgestaltungen der Erfindung zu entnehmen.

Mit dem erfindungsgemäßen Baukastensystem ist aufgrund der bei verschiedenen Ausführungsformen des Spritzwasserfängers baugleich verwendbaren Tragkonstruktion bereits eine Standardisierung erreicht, die sich im Hinblick auf die Herstellkosten des Spritzwasserfängers vorteilhaft auswirkt.

Dieser Standardisierungsvorteil wird weiter vergrößert, wenn die von Fangrinnen gebildeten Baueinheiten aus endlos extrudierten Rinnenprofilen bestehen, die je nach den vorgesehenen Abmessungen passend abgelängt werden.

Der Spritzwasserfänger kann unter Beibehaltung seiner Leistungsfähigkeit im Bereich der Kotflügelunterkante enden, falls er bei ausreichender Bodenfreiheit des Fahrzeugs durch einen weiteren Spritzwasserfänger bis nahe der Fahrbahn verlängert werden kann. Bei reduzierter Bodenfreiheit des Fahrzeugs oder auf Schlechtwegstrecken kann der weitere Spritzwasserfänger problemlos mit wenigen Handgriffen abgenommen werden.

Nachfolgend sind mehrere Ausführungsbeispiele der Erfindung anhand einer zeichnerischen Darstellung näher erläutert.

In der Darstellung zeigen:
- Fig. 1: eine Seitenansicht eines Fahrerhauses eines Lastkraftwagens mit einer Spritzwasserfängeranordnung,
- Fig. 2: die Spritzwasserfängeranordnung des Fahrerhauses nach Fig.1 in Seitenansicht,
- Fig. 3: eine Seitenansicht einer Fahrerhausvariante mit angepaßter Spritzwasserfängeranordnung,
- Fig. 4: die Spritzwasserfängeranordnung des Fahrerhauses nach Fig.3 in Seitenansicht,
- Fig. 5: eine Seitenansicht einer weiteren Fahrerhausvariante mit angepaßter Spritzwasserfängeranordnung,
- Fig. 6: die Spritzwasserfängeranordnung des Fahrerhauses nach Fig.5 in Seitenansicht,
- Fig. 7: eine gegenüber Fig.6 vergrößerte Darstellung des unteren Bereichs der Spritzwasserfängeranordnung,
- Fig. 8: einen etwa horizontalen Schnitt durch einen Spritzwasserfänger gemäß der Schnittlinie VIII-VIII in Fig.7,
- Fig. 9: drei unterschiedlich lange Spritzwasserfänger zum wahlweisen Verlängern einer der Spritzwasserfängeranordnungen und
- Fig.10: eine Frontalansicht eines Spritzwasserfängers,der durch einen daran eingehängten Spritzwasserfänger verlängert ist.

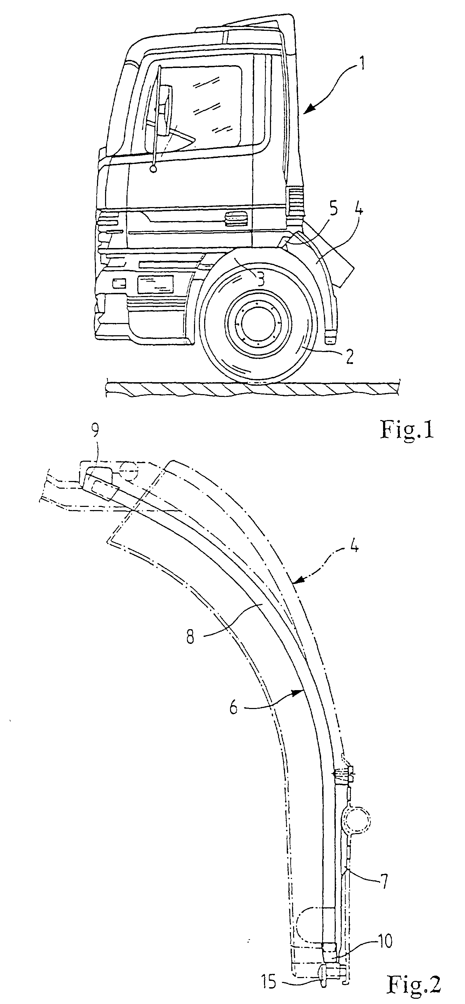

Ein in Fig. 1 sichtbares Fahrerhaus 1 eines nicht in der Gesamtheit gezeigten Lastkraftwagens der Frontlenkerbauart weist seitlich das zugeordnete Vorderrad 2 umschließende Radläufe 3 auf, die spiegelsymmetrisch gestaltet sind. Die Radläufe 3 werden im hinteren Bereich von einem Kotflügel 4 begrenzt, der unter zum Abrollumfang des Rades 2 etwa paralleler Längserstreckung gekrümmt ist. Die Kotflügel 4 enden an einer breiten Trennfuge 5, die sich oberhalb des Rades 2 nahe der Rückwand des Fahrerhauses 1 befindet und sind in nicht sichtbarer Weise relativunbeweglich am Fahrgestell des LKW befestigt. Vor den Kotflügeln 4 werden die Radläufe 3 von einer zugeordneten Umfangswand gebildet, die relativunbeweglich mit dem Fahrerhaus 1 selbst verbunden sind. Durch diese Gestaltung der Radläufe 3 wird erreicht, daß sich das Fahrerhaus 1 für Wartungszwecke oder dgl. in üblicher und daher nicht näher beschriebener Weise um eine horizontale Fahrzeugquerachse nach vorn herunterklappen läßt, während die am Fahrgestell befestigten Kotflügel 4 ihre gezeigte Stellung beibehalten.

Im Hohlquerschnitt der Kotflügel 4 ist jeweils ein Spritzwasserfänger 6 lösbar befestigt, der entsprechend dem Kotflügel 4 gekrümmt ist und sich über dessen gesamte Länge erstreckt. Dieser Spritzwasserfänger 6 dient dem Zweck, bei nasser Fahrbahn von Rad 2 hochgeschleudertes Spritzwasser aufzunehmen und auf die Fahrbahn zurückzuleiten, ohne daß es durch Turbulenzen der Fahrtwindumströmung verwirbelt wird. Hierdurch wird ein Auftreten der sogenannten Sprühnebelbildung verhindert, welche die Sichtverhältnisse verkehrsgefährdend beeinträchtigen kann.

Der Spritzwasserfänger 6 umfaßt als Hauptteile eine Tragplatte 7, ein Rinnenprofil 8 und einen Halteschuh 9. Dabei erstreckt sich die Tragplatte 7 vom unteren Ende des Kotflügels 4 ausgehend annähernd senkrecht nach oben und ist mit der Umfangswand des Kotflügels 4 fest verschraubt. Im unteren Bereich ist die Tragplatte 7 als Wasserkasten 10 ausgebildet, der innenseitig des Kotflügels 4 eine Auslauföffnung aufweist, so daß im Wasserkasten 10 gesammeltes Spritzwasser seitlich der Fahrspur zur Fahrbahn abfließen kann. Auf der Tragplatte 7 ist das Rinnenprofil 8 unter Distanz schraubbefestigt und das untere Ende des Rinnenprofils 8 ragt in den Wasserkasten 10 hinein.

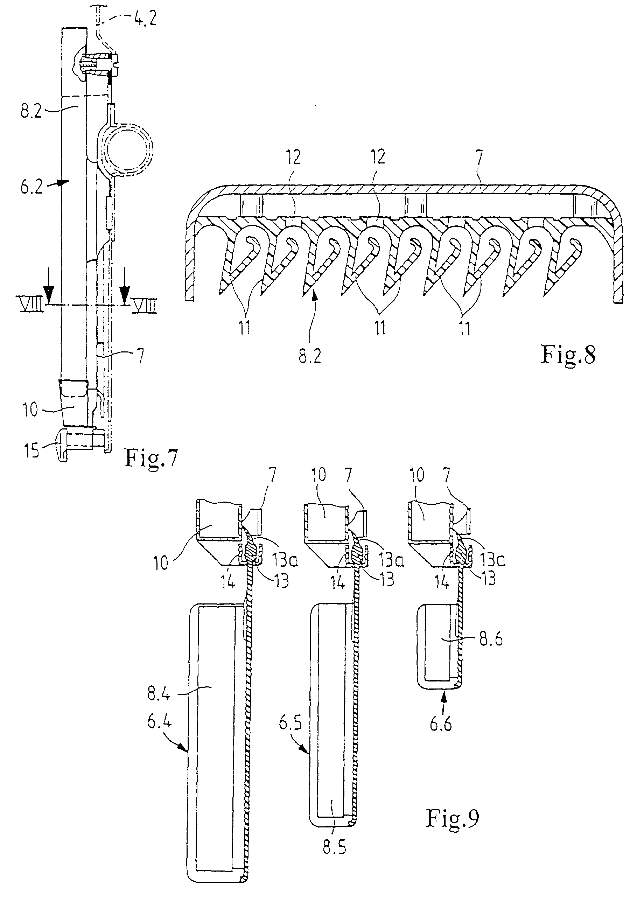

Das Rinnenprofil 8 ist eine hier einteilige Baueinheit aus vielen, im Querschnitt gesehen etwa V-förmigen Fangrinnen 11,deren eine Rinnenwand im Querschnitt gesehen bogenförmig gekrümmt verläuft, wobei die Fangrinnen seitlich miteinander verbunden sind, wie in Fig.8 zu erkennen ist. Um eine kostengünstige Fertigung des Rinnenprofils 8 zu ermöglichen, besteht es aus schlagzähem Kunststoffmaterial,das strangextrudiert und unter einem Einheitsradius vorgekrümmt ist, wobei der Einheitsradius etwa dem Krümmungsradius des Kotflügels 4 entspricht. Im Überdeckungsbereich mit der Tragplatte7 ist das Rinnenprofil 8 durch die Schraubbefestigungsmittel etwa parallel zur Rückwand der Tragplatte 7 abgeplattet und im nach oben überstehenden Längenbereich diesem Radius entsprechend gekrümmt.

Am oberen vorderen Ende des Kotflügels 4 ist der Halteschuh 9 befestigt, in den der vordere Endbereich des abgelängten Rinnenprofils 8 eingeschoben und dadurch gehalten ist.

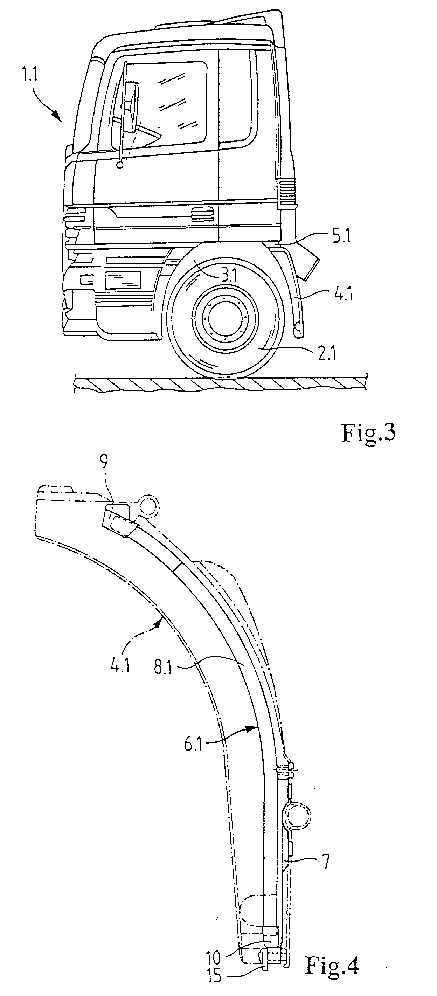

Fig. 3 zeigt ein Fahrerhaus 1.1, das sich nur geringfügig vom Fahrerhaus 1 unterscheidet. Der Kotflügel 4.1 dieses Fahrerhauses 1.1 grenzt an eine etwa horizontal verlaufende Trennfuge 5.1 an, die sich unterhalb der Oberkante des Radausschnittes befindet. Hierdurch mußte die Längserstreckung des Spritzwasserfängers 6.1 entsprechend reduziert werden. Diese Verkürzung erfolgte auf wirtschaftliche Weise durch entsprechendes Ablängen des Rinnenprofils 8.1. auf das erforderliche Maß.Die Tragplatte 7 samt Wasserkasten 10 sowie der Halteschuh 9 wurden baugleich verwendet.

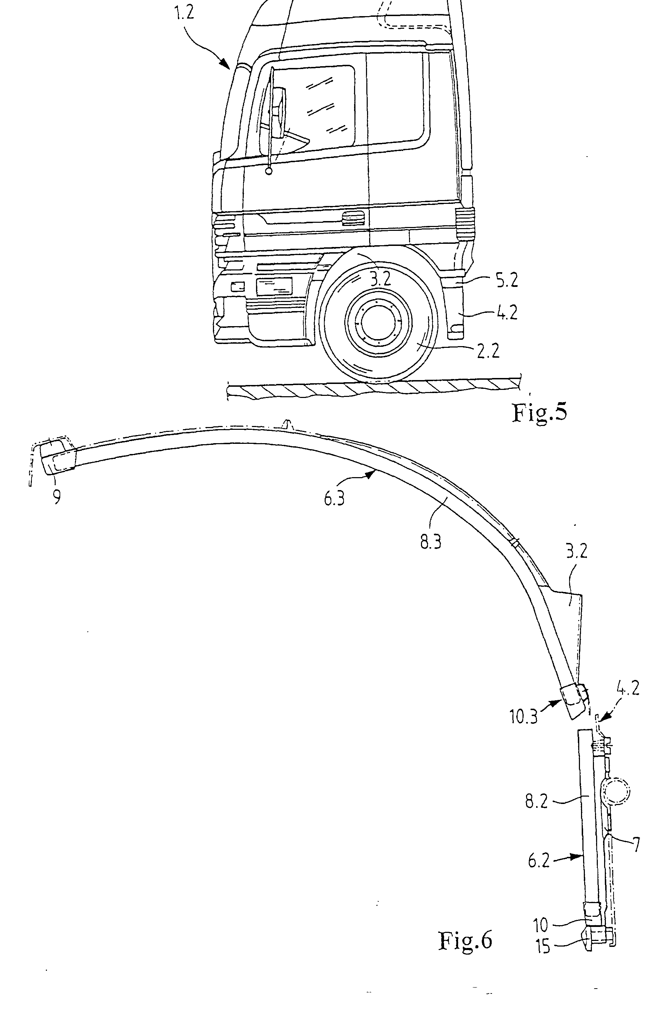

Beim Fahrerhaus 1.2 nach Fig. 5 liegt die Trennfuge 5.2 zwar ebenfalls horizontal aber noch deutlich tiefer als die Trennfuge 5.1 beim Fahrerhaus 1.1.,wodurch der fahrgestellfeste Kotflügel 4.2 eine noch deutlich geringere Höhenerstreckung aufweist. Wie in Verbindung mit Fig. 6 zu erkennen ist, reicht diese Höhenerstreckung gerade zur Befestigung der Tragplatte 7 auf dessen Gegenfläche aus. Zur Anpassung an diese Höhenerstreckung ist das Rinnenprofil 8.2 entsprechend abgelängt und steht somit nicht mehr nach oben über. Um die Spritzwasserabsorption dieser Spritzwasserfängeranordnung zu verbessern, ist ein weiterer Spritzwasserfänger 6.3 im Radlauf 3.2 angeordnet. Dieser zusätzliche Spritzwasserfänger 6.3 arbeitet völlig unabhängig vom Spritzwasserfänger 6.2 und ist unter der fahrerhausfesten Umfangswand des Radlaufes 3.2 befestigt. Der Spritzwasserfänger 6.3 besteht aus einem entsprechend abgelängten Rinnenprofil 8.3, einem Halteschuh 9 in den das vordere Ende des Rinnenprofils 8.3 zur Festlegung hineingeschoben ist und einen auf den hinteren Endbereich des Rinnenprofils 8.3 aufgeschobenen Wasserkasten 10.3, der gleichzeitig als hinterer Halteschuh fungiert und eine nicht sichtbare seitliche Auslauföffnung aufweist.

In den Fig. 7 und 8 ist der Zusammenbau des Spritzwasserfängers 6.2 deutlicher zu erkennen.Insbesondere ist in der Schnittdarstellung sichtbar,daß die Bogenwände der Fangrinnen 11 mit Langlöchern 12 durchsetzt sind, durch die in bekannter Weise ein Teil des gefangenen Spritzwassers in den Zwischenraum zur Tragplatte 7 übertreten und in den Wasserkasten 10 herunterrinnen kann.

Die Wirkung der Spritzwasserfängeranordnung kann weiter verbessert werden, wenn ein weiterer Spritzwasserfänger 6.4, 6.5 oder 6.6 unter der Tragplatte 7 aufgehängt wird, um den freien Abstand zur Fahrbahn zu reduzieren.Diese Spritzwasserfänger 6.4, 6.5 und 6.6 weisen eine unterschiedlich Höhenerstreckung auf,und lassen sich je nach gewünschter Restbodenfreiheit an der Tragplatte 7 einhängen, wie in Fig. 9 gezeigt ist.Die aufgehängten Spritzwasserfänger 6.4, 6.5 und 6.6 weisen im Unterschied zu den vorher beschriebenen Ausführungsformen keinen Wasserkasten auf, sondern das gefangene Spritzwasser wird direkt auf die Fahrbahn abgeleitet.Diese Spritzwasserfänger bestehen aus entsprechend abgelängten Rinnenprofilabschnitten,die ähnlich einem Spritzlappen unter der Tragplatte 7 schwenkbeweglich aufgehängt sind.

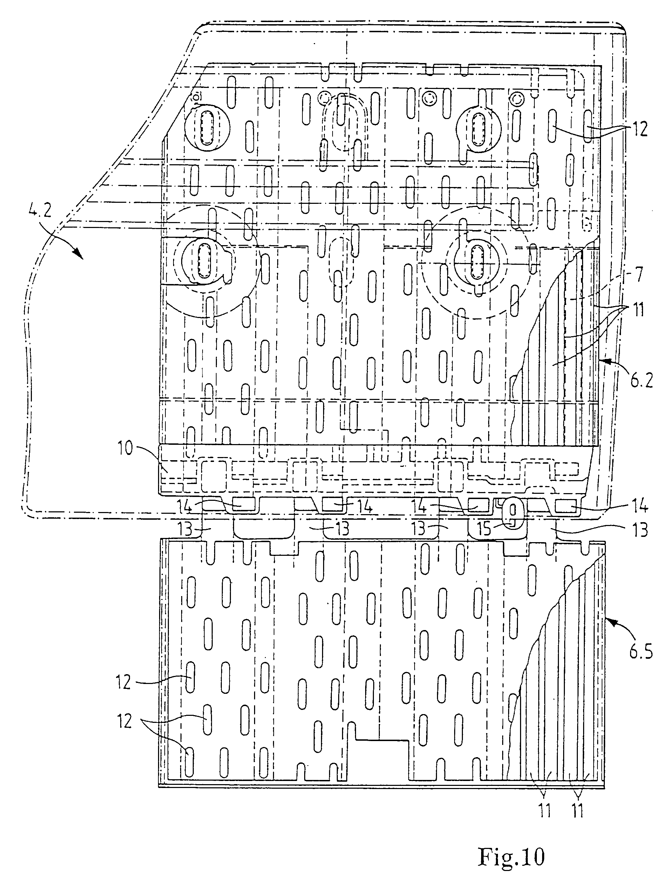

Der Spritzlappen der Spritzwasserfänger 6.4, 6.5 und 6.6 weist zur leicht lösbaren Aufhängung nach oben abstehende Spritzlappenhaken 13 auf, welche durch Anheben und seitliches Verschieben des zu montierenden Spritzwasserfängers in hinter dem Wasserkasten 10 angeordnete Hakenösen 14 der Tragplatte 7 einhakbar sind, wie in Verbindung mit Fig. 10 deutlich zu erkennen ist.

Um ein ungewolltes Aushaken des eingehakten Spritzwasserfängers zu verhindern, ist die Aushakbewegung desselben durch einen ausrastbaren Riegelbolzen 15 blockierbar.

Damit der aufgehängte Spritzwasserfänger 6.4,6.5 bzw. 6.6 nicht beschädigt wird,wenn er z.B. auf Schlechtwegstrecken kurzzeitig aufsetzt, greifen die Spritzlappenhaken 13 mit Höhenspiel in ihre Hakenöse 14 ein. Zur Abstützung der Spritzlappenhaken 13 in ihrer Hakenöse 14 ist an die Haken 13 jeweils eine Fahne 13a angespritzt.

## Patentansprüche

1. Spritzwasserfänger (6, 6.1, 6.2, 6.3, 6.4, 6.5, 6.6) für Fahrzeuge, der am Radlauf des zugeordneten Fahrzeugrades (2) derart anbringbar ist, daßer dem Abrollumfang des Rades (2) beabstandet gegenüberliegt, mit einer Fangrinnenanordnung aus mehreren nebeneinander her verlaufenden, seitlich zu einer Baueinheit miteinander verbundenen Fangrinnen (8), entlang denen gefangenes Spritzwasser einem Wasserkasten (10) zuleitbar ist, der von einer hinter dem Rad (2) am Radlauf anbringbaren Tragkonstruktion (7) der Baueinheit gehalten ist und eine seitliche Auslauföffnung für das gesammelte Spritzwasser aufweist,
**dadurch gekennzeichnet,**
**daß** der Spritzwasserfänger (6, 6.1,6.2) aus Komponenten eines Baukastensystems zusammengestellt ist, wobei von Fangrinnen gebildete Baueinheiten (8, 8.1, 8.2) unterschiedlicher Längenerstreckung an einer baugleichen Tragkonstruktion (7) anbringbar sind,und daß an der Unterseite der Tragkonstruktion (7) ein weiterer Spritzwasserfänger (6.4, 6.5, 6.6) mit einem Rinnenprofil (8.4, 8.5, 8.6) und spritzlappenähnlicher Erstreckung leicht lösbar befestigbar ist.

2. Spritzwasserfänger nach Anspruch 1,
**dadurch gekennzeichnet,**
**daß** die von Fangrinnen gebildeten Baueinheiten zu Rinnenprofilen (8, 8.1, 8.2) strangextrudiert, unter einem Einheitsradius vorgekrümmt und jeweils auf Maß der vorgesehenen Baueinheit abgelängt sind.

3. Spritzwasserfänger nach Anspruch 2,
**dadurch gekennzeichnet,**
**daß** die Rinnenprofile (8, 8.1,8.2) im Überdeckungsbereich mit der Tragkonstruktion (7) annähernd gerade abgeplattet und in einer etwa vertikalen Fahrzeugquerebene gehalten sind.

4. Spritzwasserfänger nach Anspruch 2,
**dadurch gekennzeichnet,**
**daß** die Rinnenprofile (8, 8.1, 8.2) gegenüber ihrer Tragkonstruktion (7) nach oben überstehen und im montierten Zustand mit ihrem nach oben vorn gerichteten Endbereich in einen am Radlauf (3, 3.1) befestigbarer Halteschuh (9) einschiebbar sind

5. Spritzwasserfänger nach Anspruch 2,
**dadurch gekennzeichnet,**
**daß** eines der Rinnenprofile (8.2) etwa mit der Tragkonstruktion (7) endet und in einem Abstand darüber ein weiteres Rinnenprofil (8.3) entlang dem Radlauf (3.2) anbringbar ist, das mit beiden Endbereichen in am Radlauf (3.2) befestigte Haltemittel (9, 10.3) einschiebbar ist.

6. Spritzwasserfänger nach Anspruch 1,
**dadurch gekennzeichnet,**
**daß** der weitere Spritzwasserfänger (6.4, 6.5, 6.6) an seiner oberen Randseite mehrere Haken (13) aufweist, die in zugeordnete Ösen (14) der Tragkonstruktion (7) einhakbar und gegen Aushaken sicherbar sind.

7. Spritzwasserfänger nach Anspruch 6,
**dadurch gekennzeichnet,**
**daß** zum Sichern des Spritzwasserfängers (6.4, 6.5,6.6) gegen Aushaken ein ausrastbarer Riegelbolzen (15) vorgesehen ist.

8. Spritzwasserfänger nach Anspruch 6,
**dadurch gekennzeichnet,**
**daß** die Haken (13) mit Höhenspiel in ihre Öse (14) eingreifen, wobei an die Haken (13) jeweils eine Fahne (13a) zur Abstützung in der Öse (14) angespritzt ist.

9. Spritzwasserfänger nach Anspruch 6,
**dadurch gekennzeichnet,**
**daß** zum wahlweisen Einhängen an der Tragkonstruktion (7) mehrere Spritzwasserfänger ( 6.4, 6.5, 6.6) unterschiedlicher Bauhöhe vorgesehen sind.

## Claims

1. Spray water baffle (6, 6.1, 6.2, 6.3, 6.4, 6.5, 6.6) for vehicles, which can be attached on the wheel arch of the associated vehicle wheel (2) in such manner that it is positioned opposite and a distance away from the rolling circumference of the wheel (2), comprising an arrangement of capturing grooves with several capturing grooves (8) extending side by side and connected laterally to make a single structural unit, in which captured spray water can run down into a water-box (10) which is held by a support structure (7) for the structural unit that can be attached to the wheel arch behind the wheel (2), and which has at the side a discharge aperture for the spray water collected,
**characterised in that**
the spray water baffle (6, 6.1, 6.2) is assembled from components of a modular system such that structural units comprising capturing grooves (8, 8.1, 8.2) of different lengths can be attached to a support structure (7) of the standard construction, and on the lower side of the support structure (7) a further spray water baffle (6.4, 6.5, 6.6) consisting of a grooved section (8.4, 8.5, 8.6), of length similar to a spray protector flap, can be attached and can be easily detached.

2. Spray water baffle according to Claim 1,
**characterised in that**
the structural units formed of capturing grooves are continuously extruded as grooved sections (8, 8.1, 8.2), pre-curved to a standard radius and in each case cut to the length of the structural unit envisaged

3. Spray water baffle according to Claim 2,
**characterised in that**
in the area where they overlap the support structure (7), the grooved sections (8, 8.1, 8.2) are approximately flattened, and are held in an approximately vertical plane transverse to the vehicle.

4. Spray water baffle according to Claim 2,
**characterised in that**
relative to their support structure (7) the grooved sections (8, 8.1, 8.2) project upwards and, when fitted, can be inserted with their upward and forward directed end areas into a holding bracket (9) that can be attached on the wheel arch (3, 3.1).

5. Spray water baffle according to Claim 2,
**characterised in that**
one of the grooved sections (8.2) ends at approximately the level of the support structure (7) and, a distance above it, a further grooved section (8.3) can be attached along the wheel arch (3.2), which can be inserted with both its end areas into holding means (9, 10.3) attached on the wheel arch (3.2).

6. Spray water baffle according to Claim 1,
**characterised in that**
the further spray water baffle (6.4, 6.5, 6.6) has at its upper edge several hoqks (13), which can be hooked into associated eyes (14) of the support structure (7) and can be secured against unhooking.

7. Spray water baffle according to Claim 6,
**characterised in that**
a locking bolt (15) that can be released is provided to secure the spray water baffle (6.4, 6.5, 6.6) against unhooking.

8. Spray water baffle according to Claim 6,
**characterised in that**
the hooks (13) engage in their eyes (14) with some upward play, and each hook has a lug (13a) injection-moulded onto it to support it in the eye (14).

9. Spray water baffle according to Claim 6,
**characterised in that**
several spray water baffles (6.4, 6.5, 6.6) of different heights are provided, to allow a choice of which to suspend on the support structure (7).

## Revendications

1. Bavette de garde-boue (6,6.1,6.2,6.3,6.4,6.5, 6.6) pour véhicules, qui peut être montée sur le passage de roue pour la roue associée (2) du véhicule de telle sorte qu'il est en vis-à-vis et à distance de la périphérie de roulement de la roue (2), comportant un dispositif à rainures de captage constitué par plusieurs rainures de captage (8) qui sont disposées côte-à-côte et sont reliées entre elles latéralement pour former une unité de construction et le long desquelles de l'eau projetée captée peut être amenée à un réservoir d'eau (10), qui est retenu par une structure porteuse (7) de l'unité de construction, qui peut être montée en arrière de la roue (2), et possède une ouverture latérale d'évacuation pour l'eau projetée collectée, **caractérisée en ce que** la bavette de garde-boue (6,6.1,6.2) est formée par l'assemblage de composants d'un système modulaire, des unités de construction (8,8.1,8.2) formées par des rainures de captage et possédant des longueurs différentes pouvant être montées sur une structure de support de même nature, et qu'une autre bavette de garde-boue (6.4,6.5,6.6) possédant un profil de rainures (8.4,8.5,8.6) et une étendue similaire à celle d'écrans de garde-boue pattes saillantes peut être fixée, de manière à être aisément amovible, sur la face inférieure de la structure de support.

2. Bavette de garde-boue selon la revendication 1, **caractérisée en ce que** les unités de construction formées par les nervures de captage sont formées par extrusion sous la forme de profilés en forme de rainures (8,8.1,8.2), sont précintrées au-dessous d'un rayon d'unité et sont coupées respectivement à longueur, à la cote de l'unité de construction prévue,

3. Bavette de garde-boue selon la revendication 2, **caractérisée en ce que** les profilés en forme de rainures (8,8.1,8.2) sont aplatis avec une forme approximativement rectiligne dans la zone de recouvrement avec la structure de support (7) et sont retenus dans un plan transversal approximativement vertical du véhicule.

4. Bavette de garde-boue selon la revendication 2, **caractérisée en ce que** les profilés en forme de nervures (8,8.1,8.2) font saillie vers le haut par rapport à leur structure de support (7) et, à l'état monté, peuvent être insérés, par leur partie d'extrémité dirigée vers l'avant et vers le haut, dans un sabot de retenue (9) pouvant être fixé au passage de roue (3,3.1).

5. Bavette de garde-boue selon la revendication 2, **caractérisée en ce que** l'un des profilés en forme de nervures (8.2) se termine approximativement avec la structure de support (7) et qu'un autre profilé en forme de nervure (8.3) peut être monté le long du passage de roue (3.2), à une certaine distance et au-dessus du profilé précédent, qui peut être inséré avec ses deux parties d'extrémité dans des moyens de retenue (9,10.3) fixés au le passage de roue (3.2).

6. Bavette de garde-boue selon la revendication 1, **caractérisée en ce que** l'autre bavette de garde-boue (6.4,6.5,6.6) comporte, sur son côté marginal supérieur, plusieurs crochets (13), qui peuvent s'accrocher dans des oeillets associés (14) de la structure de support (7) et peuvent être bloqués contre un décrochement.

7. Bavette de garde-boue selon la revendication 6, **caractérisée en ce que** pour le blocage de la bavette de garde-boue (6.4,6.5,6.6) contre un décrochement, il est prévu un axe de verrouillage (15) pouvant être désencliqueté.

8. Bavette de garde-boue selon la revendication 6, **caractérisée en ce que** les crochets (13) s'engagent avec un certain jeu en hauteur dans leurs oeillets (14), une languette respective (13a) destinée à prendre appui dans l'oeillet (14) étant moulée par injection sur les crochets (13).

9. Bavette de garde-boue selon la revendication 6, **caractérisée en ce que** plusieurs bavettes de garde-boue (6.4,6.5,6.6) ayant des hauteurs différentes sont prévues pour l'accrochage au choix à la structure de support (7).
